# EUROPÄISCHE PATENTSCHRIFT

(11) **EP 0 870 310 B1**
(45) Veröffentlichungstag und Bekanntmachung des Hinweises auf die Patenterteilung: **20.03.2002**
(21) Anmeldenummer: 96932433.4
(22) Anmeldetag: 03.08.1996
(51) Int. Cl.: H01G 4/20

(54) **KUNSTSTOFFOLIEN FÜR FOLIENKONDENSATOREN UND HERSTELLUNGSVERFAHREN**
PLASTIC FILMS FOR FILM CAPACITORS AND MANUFACTURING PROCESS
FILMS EN PLASTIQUE UTILES POUR PRODUIRE DES CONDENSATEURS A FILMS EN PLASTIQUE, ET PROCEDE DE PRODUCTION

(30) Priorität: 07.08.1995 DE 19528929
(43) Veröffentlichungstag der Anmeldung: 14.10.1998
(73) Patentinhaber: Aluminium Feron GmbH & Co., 52355 Düren (DE)
(72) Erfinder: HÖLS, Lothar, D-52355 Düren (DE)
(74) Vertreter: Patentanwälte Hauck, Graalfs, Wehnert, Döring, Siemons
(86) Internationale Anmeldenummer: DE9601448
(87) Internationale Veröffentlichungsnummer: WO9706203

(56) Entgegenhaltungen:
- EP-A- 0 665 563
- PATENT ABSTRACTS OF JAPAN vol. 018, no. 221 (E-1540), 20.April 1994 & JP 06 020868 A (MATSUSHITA ELECTRIC IND CO LTD;OTHERS: 01), 28.Januar 1994, in der Anmeldung erwähnt

## Beschreibung

Die vorliegende Erfindung betrifft ein Verfahren zur Herstellung von Kunststoffolien, die zur Herstellung von Folienkondensatoren dienen.

Es ist bekannt, Folienkondensatoren so herzustellen, daß eine Kunststoffbasisfolie einseitig oder beidseitig mit einem Metallüberzug versehen wird. Als geeignetes Metall finden hierbei Aluminium oder seine Legierungen Verwendung, wobei das Metall vorzugsweise auf die Basisfolie aufgedampft wird. Die dann erhaltene metallbeschichtete Kunststoffolie wird als Ausgangsmaterial verwendet, um mehrere Folienabschnitte übereinander zu einem Paket zu verpressen. Hierbei verkleben die einzelnen Folienabschnitte miteinander, so daß ein einheitliches Kondensatorpaket erhalten wird. Die des weiteren erforderlichen Schritte zur Herstellung der Elektrodenzu- und abführungen seien an dieser Stelle nicht im einzelnen erwähnt, da sie für die nachfolgend beschriebene Erfindung keine Rolle spielen.

Infolge der aufgedampften Metallschichten weisen derartige Kondensatoren nur eine beschränkte Feuchtigkeitsbeständigkeit auf. Es entstehen Korrosionsprobleme, da Feuchtigkeit zwischen die aufgedampfte Metallschicht und die Kunststoffbasisfolie eindringt. Diese Kondensatoren sind daher relativ billig in der Herstellung, haben jedoch nur eine begrenzte Lebensdauer.

Zur Verbesserung der Feuchtigkeitsbeständigkeit werden derartige Kondensatoren gekapselt. Das hat den Nachteil, daß diese aus geometrischen Gründen nicht als Chips in der Oberflächenmontage verwendbar sind. Darüber hinaus weisen derartige Kondensatoren nur eine beschränkte Eignung zur Durchführung der erforderlichen Lötverfahren auf.

Um die Feuchtigkeitsbeständigkeit von derartigen Folienkondensatoren zu erhöhen, hat man gemäß der japanischen Offenlegungsschrift (Kokai) 6-20868 vorgeschlagen, die Kunststoffbasisfolie mit einem Überzug auf Wasserbasis in der Form einer wässrigen Lösung oder wässrigen Dispersion zu versehen. Hierbei wird so vorgegangen, daß die extrudierte Kunststoffbasisfolie in Längsrichtung gereckt wird. Eine oder beide Seiten der Folie werden dann entweder nacheinander oder kontinuierlich mit dem Überzug auf Wasserbasis in der Form einer wässrigen Lösung oder wässrigen Dispersion versehen. Danach wird erhitzt. Schließlich wird gleichzeitig mit dem Recken der Folie in Querrichtung getrocknet. Das Produkt wird dann einer Wärmebehandlung unterzogen, wobei Temperaturen bei 230°C Anwendung finden. Es entsteht ein oberflächenmodifizierter Kunststoffilm, der eine Gesamtdicke von 1,0 - 15 µm besitzt, wobei der Überzug auf einer Seite eine Dicke von 0,03 - 0,3 µm aufweist.

Die auf diese Weise hergestellte oberflächenmodifizierte Ausgangsfolie wird dann in üblicher Weise einseitig oder beidseitig mit einem Metallüberzug versehen. Die metallbeschichteten Folien werden danach zu Kondensatorpaketen verpreßt.

Aus der EP A 0 665 563 ist ein Verfahren zur Herstellung von Kunststoffolien bekannt, die zur Herstellung von Folienkondensatoren dienen. Bei diesem bekannten Verfahren wird eine Kunststoffbasisfolie bereitgestellt. Ferner wird eine Lösung oder Dispersion aus Polycarbonat Polyurethan hergestellt. Die Lösung oder Dispersion wird auf eine oder beide Seiten der Kunststoffbasisfolie zur Herstellung eines Überzuges aufgebracht. Danach wird der Überzug getrocknet.

Es wird hierbei eine Lösung oder Dispersion aus auspolymerisiertem Polycarbonat Polyurethan hergestellt.

Kondensatoren, die aus derartigen Folien hergestellt werden, weisen einen verbesserten Widerstand gegenüber Feuchtigkeit als Kondensatoren auf, die aus unbehandelten Basisfolien hergestellt sind.

Der Erfindung liegt die Aufgabe zugrunde, ein Verfahren zur Herstellung von Kunststoffolien, die zur Herstellung von Folienkondensatoren dienen, zur Verfügung zu stellen, mit dem Kunststoffolien produziert werden können, aus denen sich Folienkondensatoren herstellen lassen, die sich durch eine besonders gute Feuchtigkeitsbeständigkeit auszeichnen.

Die vorstehend genannte Aufgabe wird erfindungsgemäß durch ein Verfahren zur Herstellung einer mit einem Überzug versehenen Kunststoffolie, die zur Herstellung eines Folienkondensators dient, gelöst, das die folgenden Schritte umfaßt:
a) Bereitstellen einer Kunststoffolie;
b) Herstellen einer Verbindungen, die erst bei einer über der Trocknungstemperatur des Überzuges liegenden erhöhten Reaktionstemperatur insbesondere über Vernetzungsreaktionen polymerisierbar sind, enthaltenden Lösung oder Dispersion;
c) Aufbringen der Lösung oder Dispersion auf eine Seite oder beide Seiten der Kunststoffbasisfolie zur Herstellung des Überzuges; und
d) Trocknen des Überzuges derart, daß durch den Trocknungsvorgang nicht die Polymerisationsreaktion initiiert wird und im Überzug weiterhin Verbindungen enthalten sind, die bei der über der Trocknungstemperatur des Überzuges liegenden erhöhten Polymerisationstemperatur insbesondere über Vernetzungsreaktionen polymerisierbar sind.

Der Kern der Erfindung besteht darin, daß der mit dem erfindungsgemäßen Verfahren auf die Kunststoffbasisfolie aufgebrachte Überzug nach dem Trocknen bei Wärmeeinwirkung noch reaktiv ist. Mit anderen Worten, im Überzug sind weiterhin Verbindungen vorhanden, welche bei einer über der Trocknungstemperatur des Überzuges liegenden erhöhten Reaktionstemperatur insbesondere über Vernetzungsreaktionen polymerisierbar sind. Diese Reaktion bzw. Polymerisation wird nach dem Aufbringen der Metallschicht auf die mit dem Überzug versehene Kunststoffbasisfolie durch das Verpressen von mehreren Folienabschnitten zu einem Kondensatorpaket bei erhöhten Temperaturen ausgelöst. Bei diesem Verpressungsvorgang, der an sich nichts Neues darstellt und bei den Verfahren des Standes der Technik ebenfalls stattfindet, finden Temperaturen über 120°C, insbesondere über 160°C, Anwendung. Die Polymerisationreaktion wird initiiert. Mit fortlaufender Reaktion erfolgt ein Aushärten des Überzuges. Dieser Prozeß ist nicht reversibel, so daß beim nachfolgenden Betrieb der Kondensatoren entstehende höhere Temperaturen keine Auswirkungen haben.

Darüber hinaus bewirken die höheren Temperaturen während des Herstellungsprozesses der Kondensatoren von über 120°C unter gleichzeitiger Druckapplikation eine Plastifizierung des Überzuges und somit eine Heißsiegelwirkung zwischen der Metallschicht und der mit dem Überzug versehenen Kunststoffbasisfolie.

Beide Prozesse führen insgesamt zu einer verbesserten Haftung zwischen der Metallschicht und der Basisfolie sowie zu einer verbesserten Feuchtigkeitsbeständigkeit des Endproduktes, da nunmehr ein Eindringen von Feuchtigkeit zwischen die Metallschicht und die Basisfolie weitgehend ausgeschaltet ist. Die hergestellten Kondensatoren weisen somit eine erhöhte Lebensdauer auf.

Während bei der Lehre des eingangs genannten Standes der Technik (japanische Offenlegungsschrift (Kokai) Nr. 6-20868) durch die nach dem Trocknen des aufgebrachten Überzuges erfolgende Wärmebehandlung (bei 230°C) sämtliche reaktionsfähige Substanzen bereits reagiert haben oder initiiert wurden, enthält der erfindungsgemäß aufgebrachte Überzug, der abgesehen vom Trocknen keine zusätzliche Wärmebehandlung benötigt, noch reaktive Gruppen, deren Reaktion erst beim Verpressen der Folien zur Herstellung von Kondensatorpaketen initiiert wird. Hierdurch ergeben sich die vorstehend aufgezeigten Vorteile.

Vorzugsweise werden Kunststoffolien mit einer Gesamtdicke von 0,1 - 15 µm hergestellt. Das erfindungsgemäße Verfahren ist besonders geeignet zur Herstellung von dünnen Folien, insbesondere von solchen, die eine Gesamtdicke von 0,1 - 4µm besitzen. Hieraus hergestellte Kondensatoren weisen eine besonders gute Feuchtigkeitsbeständigkeit auf. Die hergestellten Überzüge besitzen zweckmäßigerweise eine Dicke von 0,03 - 2 µm, vorzugsweise von 0,03 - 0,3 µm.

Wesentlich ist beim erfindungsgemäßen Verfahren, daß mit einer Trocknungstemperatur gearbeitet wird, die unter der Polymerisationstemperatur liegt. Der auf die Basisfolie aufgebrachte Überzug wird daher nur unter gelinder Erwärmung, vorzugsweise bei einer Trocknungstemperatur ≤ 100°C, getrocknet. Wesentlich ist hierbei, daß durch den Trocknungsvorgang nicht die Polymerisationsreaktion initiiert wird. Diese soll durch den später bei der Kondensatorherstellung durchgeführten Verpressungsvorgang erfolgen.

Als Basisfolie findet bei dem erfindungsgemäßen Verfahren vorzugsweise eine PET oder PEN-Folie Verwendung. Beispielsweise sind jedoch auch PPS (Polyphenylensulfid) -, Polysulfon-, Polypropylen-, Polyimidfolien oder Kombinationen davon geeignet. Die Verwendung von anderen Basisfolien wird hierdurch nicht ausgeschlossen.

Bei der Herstellung der Lösung zur Aufbringung des Überzuges werden die Ausgangsverbindungen vorzugsweise in Lösungsmitteln vorgelöst und dann miteinander vermischt. Die Lösung wird zweckmäßigerweise mit Hilfe eines organischen Lösungsmittels hergestellt. Die Verwendung von wässrigen Lösungsmitteln ist nicht ausgeschlossen.

Falls erforderlich, werden die Ausgangsverbindungen mit Lackhilfsmitteln, wie Antioxidantien, Lichtschutzmitteln, Füllstoffen, insbesondere Kieselsäuren, etc. versetzt.

Eine besonders bevorzugte Variante des erfindungsgemäßen Verfahrens zeichnet sich dadurch aus, daß eine Lösung oder Dispersion aus OH-Gruppen enthaltenden Verbindungen und/oder Aminogruppen-enthaltenden Verbindungen und geblockte Isocyanatgruppen-enthaltenden Verbindungen, welche unter Wärmeeinwirkung über Vernetzungsreaktionen zu Polyurethanstrukturen führen, hergestellt wird.

Nach dem Trocknen des Überzuges sind weiterhin geblockte Isocyanatgruppen vorhanden, die unter Wärmeeinwirkung mit den OH-Gruppen und/oder Aminogruppen der übrigen Verbindungen reaktionsfähig sind. Wie erwähnt, erfolgt diese Reaktion nach dem Aufbringen der Metallschicht auf die mit dem Überzug versehene Kunststoffbasisfolie durch das Verpressen von mehreren Folienabschnitten zu einem Kondensatorpaket bei den erwähnten erhöhten Temperaturen. Bei diesen Temperaturen wird der reaktive Prozeß zwischen den OH-Gruppen und/oder Aminogruppen der Verbindungen (Harze) und den geblockten Isocyanaten initiiert, wobei mit fortlaufender Reaktion ein Aushärten des Überzuges erfolgt.

Als geblockte Isocyanatgruppen-enthaltende Verbindungen werden vorzugsweise vernetzende Einbrennpolyurethanharze verwendet. Als OH-Gruppen-enthaltende Verbindungen und/oder Aminogruppen-enthaltende Verbindungen kommen vorzugsweise Polyvinlybutyralharze oder Epoxidharze zur Anwendung.

Wie erwähnt, lassen sich mit den erfindungsgemäß hergestellten Kunststoffbasisfolien Folienkondensatoren herstellen, die sich durch eine besonders gute Feuchtigkeitsbeständigkeit auszeichnen. Durch die gute Feuchtigkeitsbeständigkeit kann eine Verkapselung entfallen. Die Folien sind somit für nicht gekapselte Chips verwendbar und genügen den Ansprüchen der Oberflächenmontage. Sie weisen ferner eine besonders gute Eignung für die entsprechenden Lötverfahren (Wellenlötverfahren bei 260°C und Rückflußlötverfahren bei 235°C) auf.

Die Erfindung ist ferner auf ein Verfahren zur Herstellung von Folienkondensatoren unter Verwendung von nach einem der Ansprüche 1 bis 11 hergestellten Kunststoffolien gerichtet. Dieses Verfahren umfaßt die folgenden Schritte:
a) Aufbringen von Metallschichten auf die mit den Überzügen versehenen Kunststoffolien; und
b) Verpressen von mehreren übereinander angeordneten metallbeschichteten Kunststoffolienabschnitten zu einem Kondensatorpaket bei einer Temperatur, die der Polymerisationstemperatur der Überzugssubstanzen entspricht oder über dieser liegt.

Wie bereits vorstehend ausgeführt, wird durch das Verpressen der Kunststoffolienabschnitte bei der Polymerisationstemperatur der Überzüge oder darüber ein Auspolymerisieren der Überzugssubstanzen und somit ein endgültiges Aushärten des Überzuges erreicht. Beim Verpressen erfolgt ein enges Anschmiegen der Folien aneinander, wodurch die noch enthaltenen letzten Luftbläschen ausgepreßt und mit Material gefüllt werden. Die noch vorhandene Restfeuchtigkeit wird hierdurch eliminiert, so daß sich insgesamt eine homogene Struktur ergibt. Hiermit verbunden ist ein Polymeriations-bzw. Vernetzungsvorgang.

Im Unterschied zum eingangs aufgeführten Stand der Technik härten die Überzüge somit beim erfindungsgemäßen Verfahren endgültig erst beim Verpressungsvorgang zur Herstellung der Kondensatorpakete aus. Das hat den Vorteil, daß ggf. noch in den Überzügen vorhandene Hohlräume mit eingeschlossener Feuchtigkeit durch die während des Verpressens ablaufende Polymerisationsreaktion eliminiert werden. Hierdurch entsteht ein besonders dichter Verbund zwischen Überzug und Metallschicht mit besonders guter Klebewirkung. Dieser Verbund hat nur noch einen äußerst geringen Feuchteanteil und verhindert das spätere Eindringen von Feuchtigkeit. Es ergibt sich dadurch eine besonders gute Lötbarkeit.

Vorzugsweise wird bei einer Temperatur ≥ 120°C verpreßt. Eine genaue Einstellung der Temperatur zum Verpressen kann in Abhängigkeit von der jeweiligen Polymerisationstemperatur der Überzugssubstanzen erfolgen.

Falls erforderlich, kann die Temperatur während des Verpressens auch kontinuierlich oder diskontinuierlich erhöht, ggf. auch erniedrigt, werden.

Ergänzend sei noch darauf hingewiesen, daß als Isocyanatgruppen-enthaltende Verbindungen vorzugsweise vernetzende Einbrennpolyurethanharze verwendet werden, in welchen die Isocyanatgruppen nach den bekannten Verfahren blockiert sind und erst durch den Einfluß höherer Temperaturen reaktiviert werden. Als OH-Gruppen-enthaltende Verbindungen kommen vorzugsweise Polyvinylacetale zur Anwendung. Weiterhin sind ebenfalls Reaktionsprodukte von OH-Gruppen-enthaltenden Verbindungen und Epoxygruppen-enthaltenden-Verbindungen oder deren Mischungen in Verbindung mit Melaminharzen oder Benzoguanaminharzen für die gewünschten Eigenschaften geeignet. Eine Steuerung der Reaktivität dieser Verbindungen unter Temperatureinwirkung kann durch den Einbau von geblockten Säurekatalysatoren erfolgen.

Die Erfindung wird nachfolgend anhand von Ausführungsbeispielen im einzelnen erläutert.

### Beispiel 1

Ein Polyvinylbutyralharz mit einem Erweichungspunkt nach DIN ISO 426 von 180 - 200 und einem Gehalt an Polyvinylalkohol von 18 - 21% wurde in Ethanol im Verhältnis von 80 Gew.% Ethanol und 20 Gew.-% Harz gelöst. 20 Teile dieser Lösung wurden mit 80 Teilen eines Lösungsmittels auf Esterbasis, beispielsweise Essigsäureethylester, vermischt. Anschließend wurden 0,6 Teile eines vernetzenden Einbrennurethanharzes auf Basis Hexamethylendiisocyanat, gelöst in einem Lösungsmittel mit 75 Gew.% Harz und 25 Gew.% Lösungsmittel, mit einem Äquivalentgewicht von 378 hinzugefügt. Mittels eines Laborcoaters wurde die Beschichtungsmasse auf einer PEN-Folie der Stärke 4 µm derart aufgetragen, daß eine Trockenbeschichtungsmasse auf der Polyesterfolie von ca. 0,2g/m² resultierte. Nach dem Verdunstungsprozeß des Lösungsmittels unter gelinder Erwärmung von 30°C resultierte eine einseitig aufgetragene, blockfreie Beschichtung von ca. 5g/m² auf der Folienoberfläche. In einem zweiten Beschichtungsvorgang wurde die Rückseite der Polyesterfolie nach dem vorher beschriebenen Verfahren mit der Beschichtungsmasse beschichtet und getrocknet.

### Beispiel 2

Die nach Beispiel 1 erstellte Mischung wurde mittels eines Laborcoaters auf eine Polyethylennaphthalatfolie der Stärke 2 µm derart aufgetragen, daß ein Naßauftragsgewicht von 5g/m² resultierte. Die Schicht wurde bei 80°C getrocknet, bis alle Lösungsmittel verdunstet waren, und der Vorgang wurde auf der Rückseite der Polyethylennaphthalatfolie wiederholt. Es resultierte eine beidseitig mit einer funktionellen Schicht versehene Folie zur Herstellung von Folienkondensatoren.

### Beispiel 3

Ein Epoxidharz mit einem Schmelzpunkt nach der Kapillarmethode DIN 53736 von 65-80°C und einem Epoxidwert von 0,1 - 0,11 wurde in einem organischen Lösungsmittel, beispielsweise Essigsäureethylester, zu 5 Gew.% gelöst. Zu dieser Lösung wurden 1,8 Gew.% eines aromatischen, vernetzenden Einbrennpolyurethanharzes, gelöst zu 85 Gew.% in einer Mischung aus 1 Methoxypropylacetat-2 und Xylol im Verhältnis 1:1, mit einer Viskosität bei 23°C nach DIN 53019/1 von 21000+-8000mPas und einem Äquivalentgewicht von 875 gegeben. Diese Beschichtungsmasse wurde mit einem Laborcoater auf eine Polyesterfolie der Stärke 3,5 µm mit einem Naßauftragsgewicht von 15g/m² aufgetragen und bei 60°C solange getrocknet, bis alle Lösungsmittel verdunstet waren. In einem weiteren Schritt wurde die Rückseite der so beschichteten Folie nach dem gleichen Verfahren beschichtet. Es resultierte eine beidseitig mit einer funktionellen Schicht versehene Folie zur Herstellung von Folienkondensatoren.

Die nach dem vorstehend beschriebenen Verfahren beschichteten Folien wurden in einem weiteren Arbeitsgang unter Vakuum mit Aluminium bedampft und zu Kondensatoren weiterverarbeitet. Zu Vergleichszwecken wurden Kondensatoren mit jeweils einer Kapazität von 0,1 µF erstellt. Die während des Herstellungsprozesses der Kondensatoren auftretenden Temperaturen von über 160°C bewirkten unter gleichzeitiger Druckapplikation einerseits eine Plastifizierung der Beschichtung und somit eine Heißsiegelwirkung zwischen der Aluminiumbedampfung und der beschichteten Folie und andererseits eine Initiierung des reaktiven Prozesses zwischen den OH-Gruppen bzw. Aminogruppen der Harze und dem geblockten Isocyanat.

Die Alubedampfung zeigte ohne Temperatureinwirkung schlechte Hafteigenschaften auf dem Substrat, nach Initiierung durch Temperaturen von 160°C und einer gewissen Verweilzeit einen drastischen Anstieg der Haftung.

Die hergestellten Kondensatoren wurden mit einer Spannung von 70V/µm beaufschlagt und einem Klima von 60°C und 95% rel Feuchte ausgesetzt. Die durchschnittliche Lebensdauer der geprüften Kondensatoren ist in der nachfolgenden Tabelle aufgeführt.

| | |
|---|---|
| Kondensator ohne Beschichtung | 750 h |
| Kondensator gemäß Beispiel 1 | 1200 h |
| Kondensator gemäß Beispiel 2 | 2100 h |
| Kondensator gemäß Beispiel 3 | 1700 h |

### Beispiel 4

Gemäß diesem Beispiel wird die Lötfähigkeit von Stapel-bzw. Schichtkondensatoren verglichen. Die Verwendbarkeit eines elektrischen Kondensators als Chip-Bauelement ist abhängig vom Umfang der elektrischen Veränderungen, die durch den Lötvorgang bei der Befestigung der Bauelemente auf den Schaltplatten hervorgerufen werden.

Bei dem hier beschriebenen Experiment wurden Veränderungen dieser Art bei Chip-Kondensatoren mit beschichtetem und unbeschichtetem Dielektrikum (4,0 µm Polyethylenterephthalatfolie) miteinander verglichen. Dabei wurden jeweils zwei Lötvorgänge simuliert, und zwar das Rückfluß- und das Wellenlöten, bei welchen die Wärme des flüssigen Lotes und der Zeitraum des Vorganges unterschiedlich sind. Beim Rückfluß- und Wellenlöten sind die Kondensatoren jeweils einer Temperatur von 235°C bzw. 260°C ausgesetzt.

Die Meßergebnisse der Versuche sind in der folgenden Tabelle wiedergegeben. Sie zeigen die Abhängigkeit der elektrischen Eigenschaften der Chip-Kondensatoren (Kapazitätsänderung ΔC/C) von der Dauer der durch das Löten verursachten zusätzlichen Wärmeeinwirkung.

| | | | | | |
|---|---|---|---|---|---|
| Lötzeit bei 235°C [s] | +10 | +30 | +80 | +180 | +300 |
| Gesamte Lötzeit [s] | 10 | 40 | 120 | 300 | **600** |
| Mit Beschichtung | + | + | + | + | + |
| Ohne Beschichtung | + | + | - | - | - |
| | | | | | |
| Lötzeit bei 260°C [s] | | +5 | +10 | +15 | +30 |
| Gesamte Lötzeit [s] | | 5 | 15 | 30 | **60** |
| Mit Beschichtung | | + | + | + | + |
| Ohne Beschichtung | | - | - | - | - |
| +:ΔC/C<5% -:ΔC/C>5% nach Beispiel 1 | | | | | |

## Patentansprüche

1. Verfahren zur Herstellung einer mit einem Überzug versehenen Kunststoffolie, die zur Herstellung eines Folienkondensators dient, mit den folgenden Schritten:
a) Bereitstellen einer Kunststoffbasisfolie;
b) Herstellen einer Verbindungen, die erst bei einer über der Trocknungstemperatur des Überzuges liegenden erhöhten Polymerisationstemperatur insbesondere über Vernetzungsreaktionen polymerisierbar sind, enthaltenden Lösung oder Dispersion;
c) Aufbringen der Lösung oder Dispersion auf eine Seite oder beide Seiten der Kunststoffbasisfolie zur Herstellung des Überzuges; und
d) Trocknen des Überzuges, bei der Trocknungstemperatur derart, daß durch den Trocknungsvorgang nicht die Polymerisationsreaktion initiiert wird und im Überzug weiterhin Verbindungen enthalten sind, die bei der über der Trocknungstemperatur des Überzuges liegenden erhöhten Polymerisationstemperatur insbesondere über Vernetzungsreaktionen polymerisierbar sind.

2. Verfahren nach Anspruch 1, **dadurch gekennzeichnet, daß** eine Kunststoffolie mit einer Gesamtdicke von 0,1-15 µm, vorzugsweise 0,1-4 µm, hergestellt wird.

3. Verfahren nach Anspruch 1 oder 2, **dadurch gekennzeichnet, daß** der Überzug in einer Dicke von 0,03-2 µm, vorzugsweise 0,03-0,3 µm, hergestellt wird.

4. Verfahren nach einem der vorangehenden Ansprüche, **dadurch gekennzeichnet, daß** mit einer Trocknungstemperatur ≤ 100°C gearbeitet wird.

5. Verfahren nach einem der vorangehenden Ansprüche, **dadurch gekennzeichnet, daß** als Kunststoffbasisfolie eine Polyethylenterephthalat- oder Polyethylennaphthalat-Folie bereitgestellt wird.

6. Verfahren nach einem der vorangehenden Ansprüche, **dadurch gekennzeichnet, daß** die Ausgangsverbindungen der Lösung oder Dispersion in Lösungsmitteln vorgelöst und dann vermischt werden.

7. Verfahren nach einem der vorangehenden Ansprüche, **dadurch gekennzeichnet, daß** die Lösung mit Hilfe eines organischen Lösungsmittels hergestellt wird.

8. Verfahren nach einem der vorangehenden Ansprüche, **dadurch gekennzeichnet, daß** die Ausgangsverbindungen der Lösung oder Dispersion mit Lackhilfsmitteln, wie Antioxidantien, Lichtschutzmitteln, Füllstoffen etc., versetzt werden.

9. Verfahren nach einem der vorangehenden Ansprüche, **dadurch gekennzeichnet, daß** eine Lösung oder Dispersion aus OH-Gruppen enthaltenden Verbindungen und/oder Aminogruppen-enthaltenden Verbindungen und geblockte Isocyanatgruppen-enthaltenden Verbindungen, welche unter Wärmeeinwirkung über Vernetzungsreaktionen zu Polyurethanstrukturen führen, hergestellt wird.

10. Verfahren nach Anspruch 9, **dadurch gekennzeichnet, daß** als geblockte Isocyanatgruppen-enthaltende Verbindungen vernetzende Einbrennpolyurethanharze verwendet werden.

11. Verfahren nach Anspruch 9 oder 10, **dadurch gekennzeichnet, daß** als OH-Gruppen-enthaltende Verbindungen und/oder Aminogruppen-enthaltende Verbindungen Polyvinylbutyralharze oder Epoxidharze verwendet werden.

12. Verfahren zur Herstellung von Folienkondensatoren unter Verwendung von nach einem der Ansprüche 1 bis 11 hergestellten Kunststoffolien mit den folgenden Schritten:
a) Aufbringen von Metallschichten auf die mit den Überzügen versehenen Kunststoffolien; und
b) Verpressen von mehreren übereinander angeordneten metallbeschichteten Kunststoffolienabschnitten zu einem Kondensatorpaket bei einer Temperatur, die der Polymerisationstemperatur der Überzugssubstanzen entspricht oder über dieser liegt.

13. Verfahren nach Anspruch 12, **dadurch gekennzeichnet, daß** bei einer Temperatur ≥ 120°C verpreßt wird.

14. Verfahren nach Anspruch 12 oder 13, **dadurch gekennzeichnet, daß** die Temperatur während des Verpressens kontinuierlich oder diskontinuierlich erhöht wird.

## Claims

1. A process for producing a plastic foil provided with a coating which serves for the production of a foil capacitor, said process comprising the following steps:
a) providing a plastic backing foil;
b) producing a solution or dispersion containing compounds polymerizable only at an increased polymerization temperature above the drying temperature of the coating especially through cross-linking reactions;
c) applying the solution or dispersion to one side or both sides of the plastic backing foil for producing said coating; and
d) drying said coating at said drying temperature in such a manner that the drying process is not initiated by the polymerization reaction and in the coating furthermore compounds are contained which are polymerizable at the increased polymerization temperature above the drying temperature of said coating.

2. The process according to claim 1, **characterized in that** a plastic foil with a total thickness of 0,1-15 µm, preferably 0,1-4 µm, is produced.

3. The process according to claim 1 or 2, **characterized in that** the coating is produced in a thickness of 0,03-2 µm, preferably 0,03-0,3 µm.

4. The process according to one of the preceding claims, **characterized in that** it is worked with a drying temperature ≤ 100 °C.

5. The process according to one of the preceding claims, **characterized in that** a polyethylene terephthalate foil or polyethylene naphthalate foil is provided as plastic backing foil.

6. The process according to one of the prededing claims, **characterized in that** the starting compounds of the solution or dispersion are presolved in solvents and thereafter are mixed.

7. The process according to one of the preceding claims, **characterized in that** the solution is produced with an organic solvent.

8. The process according to one of the preceding claims, **characterized in that** lacquer auxiliaries, as for instance antioxidants, light protection agents, fillers etc., are added to the starting compounds.

9. The process according to one of the preceding claims, **characterized in that** a solution or dispersion is produced from compounds containing OH-groups and/or compounds containing amino groups and compounds containing blocked isocyanate groups which, by the influence of heat through cross-linking reactions, result in polyurethane structures.

10. The process according to claim 9, **characterized in that** cross-linking baking polyurethane resins are used as blocked isocyanate groups containing compounds.

11. The process according to claim 9 or 10, **characterized in that** polyvinyl butyral resins or epoxy resins are used as compounds containing OH-groups and/or compounds containing amino groups.

12. A process for producing foil capacitors with the use of plastic foils produced according to one of the claims 1 to 11, said process comprising the following steps:
a) applying metal layers onto the plastic foils provided with the coatings; and
b) pressing a plurality of metal-covered plastic foil portions disposed one above the other to a capacitor package at a temperature corresponding to the polymerization temperature of the coating substances or lying above the same.

13. The process according to claim 12, **characterized by** pressing at a temperature ≥ 120 °C.

14. The process according to claim 12 or 13, **characterized in that** the temperature is continuously or discontinuously increased during the pressing.

## Revendications

1. Procédé de préparation d'une feuille de plastique munie d'un revêtement, servant à la préparation d'un condensateur à film, comprenant les étapes suivantes:
a) Préparation d'une feuille de matière plastique de base;
b) Préparation d'une solution ou d'une dispersion contenant des composés qui ne sont polymérisables qu'à une température de polymérisation supérieure à la température de séchage du revêtement, en particulier par des réactions de réticulation;
c) Application de la solution ou de la dispersion sur une face ou sur les deux faces de la feuille de matière plastique de base afin de réaliser le revêtement; et
d) Séchage du revêtement à la température de séchage, de manière que le processus de séchage n'inhibe pas la réaction de polymérisation et que le revêtement contienne des composés polymérisables à des températures de polymérisation supérieures à la température de séchage du revêtement, en particulier par des réactions de réticulation.

2. Procédé selon la revendication 1, **caractérisé en ce que** l'on prépare une feuille de matière plastique d'une épaisseur totale de 0,1 à 15 µm, de préférence de 0,1 à 4 µm.

3. Procédé selon la revendication 1 ou 2, **caractérisé en ce que** le revêtement est préparé en une épaisseur de 0,03 à 2 µm, de préférence de 0,03 à 0, 3µm.

4. Procédé selon l'une des revendications qui précèdent, **caractérisé en ce que** l'on travaillé à une température de séchage ≤ 100°C.

5. Procédé selon l'une des revendications qui précèdent, **caractérisé en ce que** l'on procure comme feuille de matière plastique de base une feuille de polyéthylène téréphtalate ou une feuille de polyéthylène naphtalate.

6. Procédé selon l'une des revendications qui précèdent, **caractérisé en ce que** les composés de départ de la solution ou de la dispersion sont préalablement dissous dans des solvants, puis mélangés.

7. Procédé selon l'une des revendications qui précèdent, **caractérisé en ce que** la solution est préparée à l'aide d'un solvant organique.

8. Procédé selon l'une des revendications qui précèdent, **caractérisé en ce que** les composés de départ de la solution ou de la dispersion sont mélangés à des adjuvants pour vernis tels que des antioxydants, des agents de protection contre le lumière, des charges etc.

9. Procédé selon l'une des revendications qui précèdent, **caractérisé en ce que** l'on prépare une solution ou une dispersion à partir de composés contenant des radicaux OH et/ou de composés contenant des radicaux amino et de composés contenant des groupes isocyanate bloqués qui, sous l'action de la chaleur, induisent des réactions de réticulation en structures de polyuréthanne.

10. Procédé selon la revendication 9, **caractérisé en ce que** l'on utilise comme composés contenant des groupes isocyanate bloqués des laques de polyuréthanne à cuire réticulantes.

11. Procédé selon la revendication 9 ou 10, **caractérisé en ce que** l'on utilise comme composés contenant des radicaux OH et/ou comme composés contenant des groupes amino des résines de polyvinylbutyle ou des résines époxy.

12. Procédé de préparation de condensateurs à film utilisant les feuilles de matière plastiques préparées selon l'une des revendications 1 à 11, comprenant les étapes suivantes:
a) Application de couches métalliques sur les feuilles de matière plastiques munies de revêtement; et
b) Pressage de plusieurs sections superposées de feuilles de matière plastiques métallisées en un empilement condensateur à une température égale ou supérieure à la température de polymérisation des substances de revêtement.

13. Procédé selon la revendication 12, **caractérisé en ce que** le pressage est entrepris à une température ≥ 120°C.

14. Procédé selon la revendication 12 ou 13, **caractérisé en ce que** la température est élevée de manière continue ou discontinue pendant le pressage.
